# EUROPEAN PATENT SPECIFICATION

(11) **EP 3 862 193 B1**
(45) Date of publication and mention of the grant of the patent: **19.04.2023**
(21) Application number: 20382087.3
(22) Date of filing: 10.02.2020
(51) Int. Cl.: B60B 7/10, B60B 7/16

(54) **INSERT FOR VEHICLE WHEELS**
EINSATZTEIL FÜR FAHRZEUGRÄDER
INSERT POUR ROUES DE VEHICULE

(43) Date of publication of application: 11.08.2021
(73) Proprietor: Zanini Auto Grup, S.A., 08150 Parets del Vallés - Barcelona (ES)
(72) Inventor: CASANOVAS CEJUELA, Miguel, 08150 PARETS DEL VALLES (Barcelona) (ES); BLANCH ALERANY, Montserrat, 08150 PARETS DEL VALLES (Barcelona) (ES); DURÁN BOFILL, Pedro, 08150 PARETS DEL VALLES (Barcelona) (ES)
(74) Representative: Herrero & Asociados, S.L.

(56) References cited:
- EP-A1- 0 497 640
- EP-A2- 0 149 935
- WO-A1-2015/059317
- GB-A- 587 265

## Description

The present invention relates to an insert for vehicle wheels, comprising means for fastening thereof to the wheel of the vehicle.

### Background of the invention

inserts are commonly used on the wheels of vehicles to customise their appearance. These inserts are normally made of plastic material and are fastened to the rim of the wheel, which is made of metal.

The inserts must be reliably fastened to the rim of the vehicle wheel, which prevents the inserts from detaching from the rim for a long time, taking into account the stresses to which they are subjected due to the speed of rotation of the wheel, wind force, and vibrations.

Currently, various types of fastening means for fastening these inserts to the rims of the vehicle are known.

A first type of insert is joined to the rims of the wheels by means of screws, which must be screwed from inside the wheel. This type of fastening means has the advantage that they are very reliable, since the joining between the insert and the wheel is very long-lasting. However, this type of fastening means has the drawback that they are uncomfortable to mount, since they require screwing from the inner portion of the wheel.

The methods of fastening the plastic inserts to the rim by means of screws from inside the wheel mean that the mounting of the plastic inserts is carried out by the rim supplier and not in the assembly line of the vehicle manufacturer. The vehicle manufacturer is in favour of the frontal mounting of the plastic inserts on the rim in the assembly line thereof. The fastening system of the plastic inserts by means of screws from inside the rim forces the vehicle manufacturer to make more space in their manufacturing plant for the storage of rims with different plastic insert references. This scenario is especially critical when a large number of plastic insert references (different colours) can be mounted on the same rim reference. Therefore, the fastening system for fastening the inserts by means of screws from inside the rim greatly hinders the flexibility desired by the vehicle manufacturer when customising the wheel of the vehicle by mounting different plastic inserts on the rim.

A second type of insert is joined to the rims by means of adhesive, for example, a two-sided adhesive tape. In practice, this fastening system has proven not to be adequate, since the fastening thereof is permanent and does not enable the insert to be removed and replaced by another.

Moreover, WO 2015/059317 A1, of the same holder as the present application, discloses an insert for vehicle wheels comprising fastening means comprising a plurality of projections, each of which is associated with a fastening element.

EP0497640A1 discloses a wheel cover comprising means for fastening to the rest of the wheel of the vehicle and blocking means for the safety locking of the fastening means.

### Description of the invention

Therefore, there is a clear need for an insert for use thereof in a wheel of a vehicle that is as inexpensive as possible and that can be easily mounted from the front portion thereof, but that has an anti-theft system preventing the removal thereof from the front portion and enables most of said insert to be made of a material which does not require high thermal resistance.

The mentioned drawbacks are resolved with the insert for wheels of the invention, while presenting other advantages which will be described below.

The insert for vehicle wheels according to the present invention is defined in claim 1 and it comprises an insert body and fastening means that enable said insert to be fastened to a rim of a wheel, wherein said fastening means comprise:
- at least one retaining element provided with a step and
- at least one fastening element covering the or each retaining element, the or each fastening element comprising at least one tab that is coupled to said step.

Advantageously, said at least one retaining element and said at least one fastening element are made of plastic material, the use of any metal element not being necessary.

According to a preferred embodiment, the or each fastening element is formed by two halves joined in an articulated manner at one of the ends thereof.

To facilitate the frontal insertion of the insert into the rim, the or each retaining element has a frustoconical-shaped tip, and the or each fastening element also has a frustoconical-shaped tip preferably complementary to the retaining element tip.

To provide adequate retention, said tab of the or of each fastening element is inclined inwardly towards the fastening element.

According to a preferred embodiment, the or each retaining element is joined to the insert body by means of the placement of a ring of the or of each retaining element inside a housing of said insert body.

The ring is preferably square-shaped, preventing the rotation of the retaining element when drilling with a drill for dismounting the insert.

According to this embodiment, said housing advantageously comprises an insertion slot for said retaining element.

Preferably, said ring is arranged at the end opposite from the frustoconical-shaped tip of said retaining element.

Furthermore, according to the invention the or each fastening element comprises a fastening projection for fastening thereof to the rim of the wheel. The or each fastening element comprises a stop projection for butting against the rim of the wheel.

According to a possible embodiment, the or each fastening element is joined to the or each retaining element before fastening to the rim.

In this embodiment, the joining between the or each fastening element and the or each retaining element is advantageously performed by means of joining bridges that break when fastening the insert to the rim.

Preferably, said joining bridges join the frustoconical-shaped tip of the retaining element with the inner portion of the stop projection of the fastening element.

Among others, the following advantages are achieved with the insert for wheels of the present invention:
- It makes possible to mount the insert from the front portion, with the wheel already mounted on the vehicle;
- It does not have any metal element, being completely made of plastic;
- It cannot be dismounted from the front portion, since in order to dismount it, it is necessary to break a portion of the retaining element and, in that case, only by previously dismounting the wheel of the vehicle, such that it provides an anti-theft system;
- It enables a more affordable material with lower thermal resistance to be used, because only a portion of the insert, in particular the retaining elements and the fastening elements, must be made of a material with high thermal resistance, which is more expensive, and the body of the insert can be made of a material with lower thermal resistance and that is cheaper.

### Brief description of the drawings

In order to better understand what has been set forth, several drawings are attached wherein a practical embodiment is schematically depicted merely by way of non-limiting example.
Figure 1 is a perspective view of a retaining element of the insert according to the present invention before being placed in a housing of the insert body;
Figure 2 is a perspective view of a fastening element of the insert according to the present invention in the open position thereof;
Figure 3 is a cross section view of the insert according to the present invention in the position of use thereof; and
Figure 4 is a cross-sectional perspective view of an embodiment of a retaining element and a fastening element of the insert according to the present invention, wherein the retaining element and the fastening element are joined before being fastened to a rim of a wheel.

### Description of a preferred embodiment

The insert for wheels according to the present invention comprises:
- an insert body 1,
- at least one retaining element 2 that is joined to said insert body 1 and
- at least one fastening element 3 that is fastened to a rim 4 of a vehicle wheel and is coupled to said retaining element 2.

It should be noted that the insert according to the present invention preferably comprises a plurality of retaining elements 2 and fastening elements 3, placed in adequate positions to ensure the correct fastening of the insert to the rim 4.

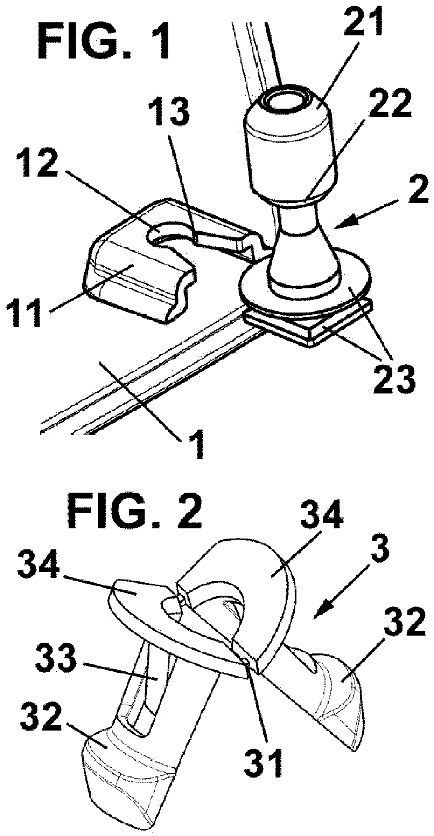

Said insert body 1 is the visible portion of the insert of the present invention and is preferably flat. According to the embodiment depicted, the joining thereof with the retaining element 2 is performed by means of a housing 11 provided with a slot 12 and a narrowing 13, as shown in Figure 1.

Said insert body 1 is preferably made of plastic material, although it could be made of any suitable material.

On the other hand, the retaining element 2, which function is to retain the insert body 1 and enable the fastening element 3 to be coupled, comprises a frustoconical-shaped tip 21, a coupling step 22 and rings 23, at least one of them being square-shaped, these rings 23 being arranged at the end furthest from the frustoconical-shaped tip 21.

The frustoconical-shaped tip 21 facilitates the introduction of the insert into a hole of a rim of a wheel.

The coupling step 22 has the function of enabling the fastening element 3 to be coupled, as will be described below, and the rings 23, together with the narrowing 13, prevent the accidental removal of the retaining element 2 inside the housing 11 of the insert body 1.

As shown in Figure 1, the portion between the coupling step 22 and the rings 23 is that which is placed at the height of the slot 12 of the housing 11, while one of the rings 23 is housed, at least partially, in said housing 11.

The retaining element 2 is advantageously made of a plastic material.

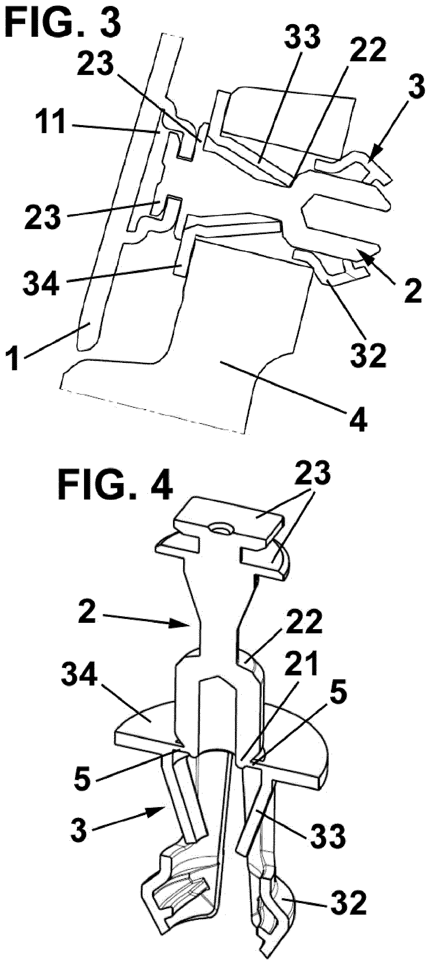

Furthermore, the insert according to the present invention comprises a fastening element 3, which in the position of use thereof is placed on the retaining element 2, as seen in Figure 3, covering said retaining element 2.

Said fastening element 3 has a form that is substantially complementary to the retaining element 2. In particular, it comprises a frustoconical-shaped tip 31 and a fastening projection 32, which enables the insert to be fastened to a rim 4 of a wheel.

The fastening element 3 also comprises one or more tabs 33, two in the embodiment depicted, which are inclined inwardly and make contact with the step 22 of the retaining element 2, and a stop projection 34, which function is to butt against one of the rings 23 and against the front portion of the rim 4, as shown in Figure 3.

The fastening element 3 is preferably formed by two halves articulated with each other at one end, in particular, at the end wherein the stop projection 34 is located, as shown in Figure 2. Furthermore, said fastening element 3 is also preferably made of a plastic material.

In Figure 3, the insert according to the present invention is shown in the position of use thereof, with the retaining element 2 joined to the insert body 1, the fastening element 3 coupled to the retaining element 2 and fastened to the rim 4 of a wheel.

As can be seen in this figure, the insert body 1 is placed entirely outside the rim 4 of the wheel, such that it can be manufactured with a material that does not require high heat resistance, since it will not be subject to heat produced by the brakes of the wheel.

An alternative embodiment of the insert according to the present invention is shown in Figure 4. According to this embodiment, the only difference is that the retaining element 2 and the fastening element 3 are already joined to each other by joining bridges 5 before being placed in the position of use.

When placed in the position of use, with the fastening element 3 covering the retaining element 2, said joining bridges 5 break, since they are designed with a suitable thickness therefor.

Preferably, said joining bridges 5 join the frustoconical-shaped tip 21 of the retaining element 2 with the inner portion of the stop projection 34 of the fastening element 3.

## Claims

1. An insert for vehicle wheels, comprising an insert body (1) and fastening means that enable said insert to be fastened to a rim (4) of a wheel, said fastening means comprising at least one retaining element (2) and at least one fastening element (3),
- said at least one retaining element (2) being provided with a step (22);
- the or each fastening element (3) comprising at least one tab (33) that is coupled to said step (22); **characterised in that** said at least one fastening element (3) covers the or each retaining element (2);
- the or each retaining element (2) has a frustoconical-shaped tip (21); and
- the or each fastening element (3) comprises a fastening projection (32) for fastening thereof to the rim (4) of the wheel.

2. The insert for vehicle wheels according to claim 1, wherein said at least one retaining element (2) and said at least one fastening element (3) are made of plastic material.

3. The insert for vehicle wheels according to claim 1, wherein the or each fastening element (3) is formed by two halves joined in an articulated manner at one of the ends thereof.

4. The insert for vehicle wheels according to claim 1, wherein the or each fastening element (3) has a frustoconical-shaped tip (31).

5. The insert for vehicle wheels according to claim 1, wherein said tab (33) of the or of each fastening element (3) is inclined inwardly towards the retaining element (2).

6. The insert for vehicle wheels according to claim 1, wherein the or each retaining element (2) is joined to the insert body (1) by means of the placement of a ring (23) of the or of each retaining element (2) inside a housing (11) of said insert body (1).

7. The insert for vehicle wheels according to claim 6, wherein said housing (11) comprises an insertion slot (12) for said retaining element (2).

8. The insert for vehicle wheels according to claims 1 and 6, wherein said ring (23) is arranged at the end opposite from the frustoconical-shaped tip (21) of said retaining element (2).

9. The insert for vehicle wheels according to claim 1, wherein the or each fastening element (3) comprises a stop projection (34) for butting against the rim (4) of the wheel.

10. The insert for vehicle wheels according to claim 1, wherein the or each fastening element (3) is joined to the or each retaining element (2) before fastening to the rim (4).

11. The insert for vehicle wheels according to claim 10, wherein the joining between the or each fastening element (3) and the or each retaining element (2) is performed by means of joining bridges (5) that break when fastening the insert to the rim (4).

12. The insert for vehicle wheels according to claims 1, 9 and 11, wherein said joining bridges (5) join the frustoconical-shaped tip (21) of the retaining element (2) with the inner portion of the stop projection (34) of the fastening element (3).

## Patentansprüche

1. Einsatzteil für Fahrzeugräder, aufweisend einen Einsatzkörper (1) und Befestigungseinrichtungen, die ein Befestigen des Einsatzteils an einer Felge (4) eines Rads erlauben, wobei die Befestigungseinrichtungen mindestens ein Halteelement (2) und mindestens ein Befestigungselement (3) aufweisen, wobei
- das mindestens eine Halteelement (2) mit einer Stufe (22) versehen ist;
- das oder jedes Befestigungselement (3) mindestens eine Lasche (33) aufweist, die mit der Stufe (22) gekoppelt ist; **dadurch gekennzeichnet, dass** das mindestens eine Befestigungselement (3) das oder jedes Halteelement (2) bedeckt;
- das oder jedes Halteelement (2) eine kegelstumpfförmige Spitze (21) hat; und
- das oder jedes Befestigungselement (3) einen Befestigungsvorsprung (32) zum Befestigen an der Felge (4) des Rads aufweist.

2. Einsatzteil für Fahrzeugräder nach Anspruch 1, wobei das mindestens eine Halteelement (2) und das mindestens eine Befestigungselement (3) aus Kunststoff hergestellt sind.

3. Einsatzteil für Fahrzeugräder nach Anspruch 1, wobei das oder jedes Befestigungselement (3) aus zwei Hälften besteht, die an einem ihrer Enden auf gelenkige Weise miteinander verbunden sind.

4. Einsatzteil für Fahrzeugräder nach Anspruch 1, wobei das oder jedes Befestigungselement (3) eine kegelstumpfförmige Spitze (31) hat.

5. Einsatzteil für Fahrzeugräder nach Anspruch 1, wobei die Lasche (33) des oder jedes Befestigungselements (3) einwärts zu dem Halteelement (2) hin geneigt ist.

6. Einsatzteil für Fahrzeugräder nach Anspruch 1, wobei das oder jedes Halteelement (2) mit dem Einsatzteilkörper (1) verbunden wird durch Positionieren eines Rings (23) des oder jedes Halteelements (2) in das Innere eines Gehäuses (11) des Einsatzteilkörpers (1).

7. Einsatzteil für Fahrzeugräder nach Anspruch 6, wobei das Gehäuse (11) einen Einsetzschlitz (12) für das Halteelement (2) aufweist.

8. Einsatzteil für Fahrzeugräder nach Anspruch 1 und 6, wobei der Ring (23) an dem der kegelstumpfförmigen Spitze (21) gegenüberliegenden Ende des Halteelements (2) angeordnet ist.

9. Einsatzteil für Fahrzeugräder nach Anspruch 1, wobei das oder jedes Halteelement (3) einen Anschlagvorsprung (34) zum Anstoßen an die Felge (4) des Rads aufweist.

10. Einsatzteil für Fahrzeugräder nach Anspruch 1, wobei das oder jedes Befestigungselement (3) vor Befestigen an der Felge (4) mit dem oder jedem Halteelement (2) verbunden wird.

11. Einsatzteil für Fahrzeugräder nach Anspruch 10, wobei das Verbinden zwischen dem oder jedem Befestigungselement (3) und dem oder jedem Halteelement (2) durch Verbindungsbrücken (5) erfolgt, die beim Befestigen des Einsatzteils an der Felge (4) brechen.

12. Einsatzteil für Fahrzeugräder nach Anspruch 1, 9 und 11, wobei die Verbindungsbrücken (5) die kegelstumpfförmige Spitze (21) des Halteelements (2) mit dem inneren Teil des Anschlagvorsprungs (34) des Befestigungselements (3) verbinden.

## Revendications

1. Insert pour roues de véhicule, comprenant un corps d'insert (1) et des moyens de fixation qui permettent audit insert d'être fixé à une jante (4) d'une roue, lesdits moyens de fixation comprenant au moins un élément de retenue (2) et au moins un élément de fixation (3),
- ledit au moins un élément de retenue (2) étant prévu avec un décrochement (22) ;
- le ou chaque élément de fixation (3) comprend au moins une patte (33) qui est couplée audit décrochement (22) ; **caractérisé en ce que** ledit au moins un élément de fixation (3) couvre le ou chaque élément de retenue (2) ;
- le ou chaque élément de retenue (2) présente une pointe de forme tronconique (21) ; et
- le ou chaque élément de fixation (3) comprend une saillie de fixation (32) pour fixer celui-ci à la jante (4) de la roue.

2. Insert pour roues de véhicule selon la revendication 1, dans lequel ledit au moins un élément de retenue (2) et ledit au moins un élément de fixation (3) sont fabriqués en un matériau plastique.

3. Insert pour roues de véhicule selon la revendication 1, dans lequel le ou chaque élément de fixation (3) est formé par deux moitiés assemblées de manière articulée au niveau d'une des extrémités de celui-ci.

4. Insert pour roues de véhicule selon la revendication 1, dans lequel le ou chaque élément de fixation (3) présente une pointe de forme tronconique (31) .

5. Insert pour roues de véhicule selon la revendication 1, dans lequel ladite patte (33) du ou de chaque élément de fixation (3) est inclinée vers l'intérieur en direction l'élément de retenue (2).

6. Insert pour roues de véhicule selon la revendication 1, dans lequel le ou chaque élément de retenue (2) est assemblé au corps d'insert (1) au moyen du placement d'une bague (23) du ou de chaque élément de retenue (2) à l'intérieur d'un logement (11) dudit corps d'insert (1).

7. Insert pour roues de véhicule selon la revendication 6, dans lequel ledit logement (11) comprend une fente d'insertion (12) pour ledit élément de retenue (2).

8. Insert pour roues de véhicule selon les revendications 1 et 6, dans lequel ladite bague (23) est agencée à l'extrémité opposée de la pointe de forme tronconique (21) dudit élément de retenue (2).

9. Insert pour roues de véhicule selon la revendication 1, dans lequel le ou chaque élément de fixation (3) comprend une saillie d'arrêt (34) pour venir en butée contre la jante (4) de la roue.

10. Insert pour roues de véhicule selon la revendication 1, dans lequel le ou chaque élément de fixation (3) est assemblé à le ou à chaque élément de retenue (2) avant la fixation à la jante (4).

11. Insert pour roues de véhicule selon la revendication 10, dans lequel l'assemblage entre le ou chaque élément de fixation (3) et le ou chaque élément de retenue (2) est effectué au moyen de ponts d'assemblage (5) qui se brisent lors de la fixation de l'insert à la jante (4).

12. Insert pour roues de véhicule selon les revendications 1, 9 et 11, dans lequel lesdits ponts d'assemblage (5) assemblent la pointe de forme tronconique (21) de l'élément de retenue (2) avec la portion interne de la saillie d'arrêt (34) de l'élément de fixation (3).
